Europäisches Patentamt

European Patent Office

Office européen des brevets

(11) Publication number: **0 059 967**
A1

## EUROPEAN PATENT APPLICATION

(21) Application number: **82101802.5**

(22) Date of filing: **08.03.82**

(51) Int. Cl.³: **H 04 B 3/23**

(30) Priority: **09.03.81 IT 6732381**

(43) Date of publication of application:
**15.09.82 Bulletin 82/37**

(84) Designated Contracting States:
**DE FR GB NL SE**

(71) Applicant: **CSELT Centro Studi e Laboratori Telecomunicazioni S.p.A.**
**Via Guglielmo Reiss Romoli, 274**
**I-10148 Turin(IT)**

(72) Inventor: **Fossati, Roberto**
**C.so Vittorio Emanuele No. 174**
**Turin(IT)**

(72) Inventor: **Lazzari, Vicenzo**
**Via Nigra No. 10**
**Leini-Torino(IT)**

(74) Representative: **Riederer Freiherr von Paar zu Schönau, Anton et al,**
**Müllerstrasse 31**
**D-8000 München 5(DE)**

(54) System for the bidirectional simultaneous transmission via a two-wire line for digital telephone.

(57) System for the bidirectional simultaneous transmission via a two-wire line for digital telphone, that uses a circuit of the adaptive kind for the cancellation of the noise caused in the receiver by the local transmitter owing to mismatchings along the line. A correction signal, correlated both to the symbols transmitted during this bit time and during a number of preceding ones, as well as to the line status, is subtracted from the signal to be sent to the receiver.

The signal emitted by the remote transmitter does not affect the correction signal as it is encoded by a line code having no dc component. One version of the circuit to be installed in the exchange (Figure 2) and another synchronized with the received signal, to be installed at the subscriber's (Figure 1), are provided.

FIG 1

EP 0 059 967 A1

./...

FIG 2

*Patentanwalt*

*Dipl.-Ing. Anton Freiherr* *Riederer von Paar*

Müllerstraße 31
D-8000 München 5

☎ München (089) 26 60 60
Telex 523 903 claim d
ť claims München

- Ʈᴦ

0059967

CSELT
Centro Studi e Laboratori
Telecomunicazioni S.p.A.
Via Guglielmo Reiss Romoli, 274
I- 10148 Turin, Italy

## SYSTEM FOR THE BIDIRECTIONAL SIMULTANEOUS TRANSMISSION VIA A TWO-WIRE LINE FOR DIGITAL TELEPHONE

### Description

The present invention relates to data and digital speech transmission via the subscriber's line and in particular it relates to a system for the simultaneous bidirectional transmission via a two-wire line for digital telephone.

The introduction of new and cheap integrated circuits designed for speech and data conversion into PCM code and vice versa has allowed the digital transmission directly from the subscriber's telephone set. Thanks to that both a better speech-transmission quality and an extension of the services obtainable via the telephone line are attained.

The bidirectional transmission via the subscriber's line can be effected by using a four-wire line, two for the transmission from the subscriber to the exchange and two for the opposite direction. However, as the already existing lines consist of two wires only, they all ought to be replaced, which would be too expensive.

A second method consists in the alternate transmission on the same two-wire line. The time allotted to each transmission direction is reduced so as to allow the transmission of the two binary sequences and of the guard interval within a PCM frame. Hence transmission rate results higher and also the occupied band is wider. Taking into account that the existing lines present a rather limited band width, this method does not prove the most suitable either.

A further system worth mentioning is the simultaneous transmission in both directions, as already in use for the traditional telephones with analogic signals. The band occupied is kept within acceptable values and the transmission line requires only two wires, therefore the existing telephone loop can be used. To cancel the noise originated in the receiver by the transmitter of the same set, a hybrid transformer is used apt to separate under ac conditions the receiver from the transmitter.

By the use of the hybrid transformer alone a complete cancellation of the signal generated by the transmitter at the receiver input of the same apparatus is difficult to obtain, both as a consequence of imperfect impedance matching between the line and the load impedance of the hybrid transformer, and as a result of reflections due to stubs, present along the transmission line.

To solve this problem systems have been studied, that make use of a two-level code on the line. The noise is evaluated many times during the same bit interval and added to an inverse-polarity correcting signal obtained by complex elaborations. Even if the two-level code is less affected by the noise, very fast circuits are required. to effect a greater number of elaborations within one bit-time, what entails higher costs.

These disadvantages are overcome by the system for the simultaneous bidirectional transmission via a two-wire line, provided by the present invention, which allows the use of the already existing subscriber's line for the digital transmission in both directions and does not require complex processing operations for the cancellation of the signal, emitted by the transmitter, at the input of the receiver of the same set.

The present invention provides a system for the simultaneous bidirectional transmission via a two-wire line for digital telephone, wherein the noise signal generated in the telephone receiver by the local transmitter is cancelled by means of a hybrid transformer as well as by a process in which a suitable voltage level is subtracted from the signal present at the receiver output of the hybrid transformer and the resulting difference signal is used to determine according to its sign an increasing or decreasing operation in one of the binary digital values, wherefrom said suitable voltage levels are obtained by means of digital to analog conversion, which digital value is made available at the beginning of the transmission on the line of any symbol and is correlated to the logic level of said symbol and to those of a suitable number of symbols transmitted before, the simultaneous transmission on the line being effected in both directions by the use of a code allowing the sequences of the said symbols to present no dc component.

These and other characteristics of the present invention will be made clearer by the following description of a preferred embodiment thereof, given by way of example and not in a limiting sense, and by the annexed drawings in which:

- Fig. 1 is a block diagram of a first circuit to be installed in the subscriber's set;

- Fig. 2 is a block diagram of a second circuit to be installed in the telephone exchange;

- Fig. 3 shows a number of waveforms of a few signals present in the circuits above.

It is known that when the transmission line is connected to an imperfectly-matched hybrid transformer, at the receiver input a noise signal is present, which, according to the principle of superposition, is given by the sum of the contribution of the symbol transmitted at that instant and the contributions of a number of symbols transmit-ted at the preceding bit times. In case of a conventional subscriber's tele-phone line, there are noises caused both by the imperfect operation of the hybrid transformer, and by reflections, whose effects increase as the line length decreases.

Considering that the propagation time along the line is about 5 $\mu$s/km, the noise caused by possible reflections is not negligible when it presents delays of the order of the bit time or even less. Should the delays be greater, the line attenuation would be such as to render the reflection noises negligible.

The result is that noise $D_n$ at the input of the receiving terminal at the instant n can be represented as follows:

$$D_n = \sum_{j=0}^{K} \alpha_j \cdot T_{n-j} \qquad \text{with } K \leq 4$$

where $\alpha_j$ is the amplitude of each contribution and $T_{n-j}$ is the logic value of the transmitted symbol.

By choosing a three-level line code, which as will be seen hereinafter presents a number of advantages for the present embodiment, $T_{n-j}$ can assume the values +1, -1, 0.

A code of the AMI type (Alternate Mark Inversion) without dc component proves particularly useful.

To eliminate the noise signal $D_n$ , a correction signal $C_n$ ought to be added to the signal $R_n$ present at the receiver input. $C_n$ is to compensate for the noise $D_n$ upon the variation of the transmitted symbol sequencies and upon the variation of the line conditions, therefore it must be generated by a circuit of the adaptive kind.

Taking into account the contribution of the symbol transmitted at instant n and of the four preceding symbols, five-bit words are considered in the generation of noise $D_n$ , which correspond on the whole to 32 combinations. Each of these combinations gives rise to a noise of a determined amplitude at the receiver input; of course the line mismatching and the reflections are to be taken into account while assigning the $\alpha_j$ values.

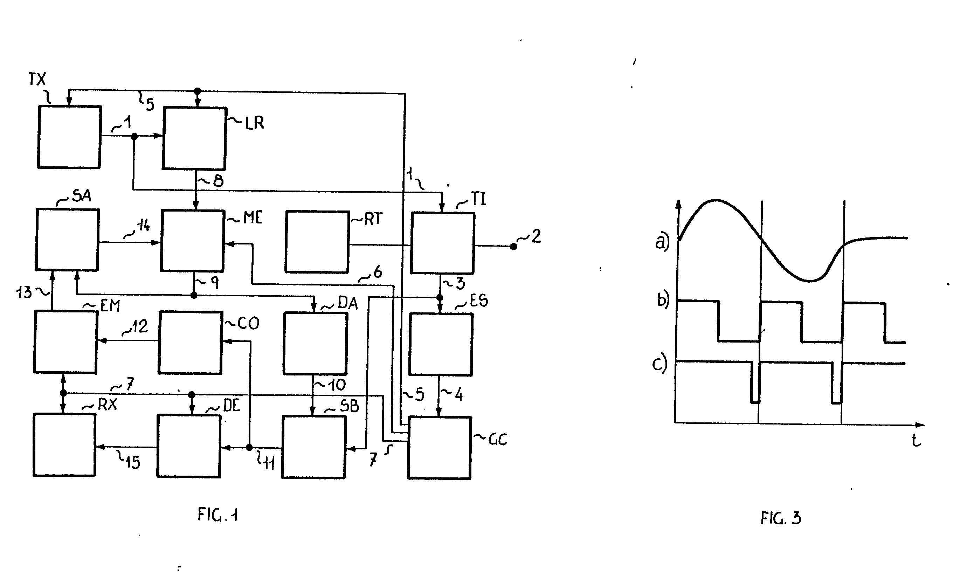

The circuit which carries out these operations is shown in block diagram in Fig. 1.

Reference TX denotes the transmitter of the digital telephone set, which comprises the source of speech signals or of data signals and the encoder. The digital signals present at the TX output are sent via wire 1 to the transmission line 2 via a hybrid transformer TI, connected to its load impedance RT and connected via wire 3 to the receiving part of the telephone set.

In this example reference is made to a transmission code of the AMI type with 80 kbit/s transmission rate. Every 10 bits the frame structure presents one synchronism bit, one bit available for a 8 kbit/s data channel and eight bits available for a 64 kbit/s PCM channel.

A circuit ES capable of extracting the synchronism signal from the received digital signal is connected to wire 3. ES can be implemented with a phase-locked loop circuit, advantageously adjusted to generate a signal having a frequency which is a multiple of the transmission rate on the line. A timing circuit GC (e.g. implemented with a digital counter) is connected to ES output via wire 4. GC supplies via wires 5, 6 and 7 suitable timing signals for the operation of various stages of the circuit.

On wire 5 there is available a symmetric square-wave signal, with period equal to the bit time, which controls the time phases of the encoding in the block TX and the delays in a digital delay line LR, implemented for instance with a shift register.

The symbols emitted by TX are serially sent to LR, which is able to delay them by five bit intervals, and then they are extracted in parallel form as five-bit words at the output connected to connection 8. These words are the addresses of a random-access memory ME, designed to supply the amplitudes of the corrections to be made on the received signal for the noise cancellation. ME is composed of 64 memory areas of at least 8 bits, each one corresponding to one of the possible 32 words with the first logic one at positive or negative level, and is enabled to read or write by the timing signal supplied by CG on wire 6. This is still a binary signal with period equal to the bit time, the first part of which is at a logic level allowing the reading operations, while the second part, much smaller than the first, is at the opposite logic level allowing the writing operations.

The binary values representative of the corrections to be made on the received signal arrive at every new bit time, during the reading phase, at the ME output connected to connection 9, wherefrom they are passed to a digital-to-analog converter DA, by which they are converted into a corresponding voltage level. This level is sent via wire 10 to a subtraction circuit SB, which receives at a second input connected to wire 3 the signal coming from the exchange as well as the noise.

Suppose that no signal arrives at the exchange, on wire 3 there is only the noise generated by the transmitter TX wherefrom the correction voltage level supplied by DA is subtracted. The difference signal, that appears at the SB output connected to wire 11, is a variable-amplitude signal with either positive or negative or zero voltage in function of a correction voltage level which may be either too low, or too high or correct in relation with the noise level. This difference signal is sent via wire 11 to a comparison circuit CO, whose output assumes a high or low level depending on the input signal sign.

Downstream CO, connected via wire 12, there is a memory element EM, in which at a suitable instant of the bit time, determined by the signal supplied by block GC on wire 7, there is written the value of CO output, i.e. the sign of the above-mentioned difference signal at the said instant.

The binary symbol supplied by EM on wire 13 controls respectively the increasing-decreasing operations of the binary values, representative of the corrections present on connection 9, in an algebraic adder SA. In particular, the variation is by a unit at each bit interval and has a sign that increases the correction binary signal if that was insufficient and vice versa. The up-dated value, present on connection 14, is written into the memory ME in the same cells that contained the preceding value, during the time determined by the signal on wire 6. As mentioned above, the writing operation takes place in a short time interval at the end of a bit time.

Even if at the beginning of the operation the memory ME contains no information, thanks to the self-correcting process above in a short-time it is loaded with the correcting values corresponding to each of the 32 possible emitted binary sequencies. Hereinafter, during the operation small oscillations take place around these values, owing both to the variations in the line conditions and to the signal emitted by the remote transmitter.

In fact, assume now that the remote station is transmitting; at the output of TI, connected to wire 3 there are present at the same time the useful signal and the noise. Therefore at the output of SB on wire 11 the difference signal will have positive or negative value as function both of the noise magnitude and of the polarity of the signal received from the exchange. However, by using, as mentioned above, a line code with no dc component, the corrections due to the useful signal are positive during one bit time and negative in the subsequent one i.e. they too have no dc component. Therefore there is only the oscillation of the least significant bits, within a digital value representative of the correction which generally consists of eight bits at least, that is why the drawback can be taken as negligible.

The block diagram of Fig. 1 is completed by a decision circuit DE of the received symbols, connected to the receiver RX via wire 15. Both DE and RX are timed by the signal supplied by GC via wire 7. It is evident that in the exchange there is provided an analogous circuit for the conversion of the digital signal sent by the subscriber with a digital telephone into an analog signal to be sent to another subscriber, with a conventional telephone, and in opposite direction, for the conversion of the analog signal into a digital signal.

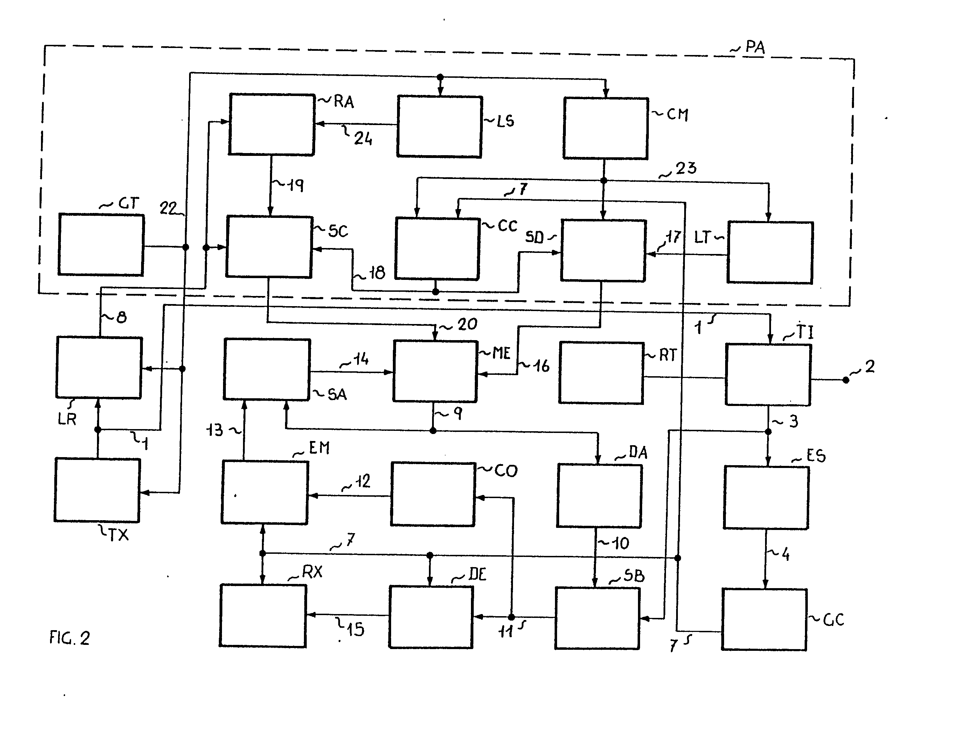

The circuit just described with reference to Fig. 1 can be also placed in the exchange, but it requires an additional part, denoted by PA and comprised in a dotted rectangle shown in Fig. 2. The remaining blocks are identical to those just examined, apart from GC which now supplies only the timing signals on wire 7.

As known, in the exchange there is a centralized clock GT, that synchronizes the signals emitted by the local transmitter TX, connected with it via wire 22. As a consequence of that, while the operation is in progress the signal supplied by the algebraic adder SA, synchronized with the signal received from the line and containing the correction value, might undergo a level transition in the time interval allotted to the writing operation in the memory. Of course this would give rise to an incorrect storage of the correction values in the respective cells.

The additional part PA is designed to avoid the occurrence of this event by the automatic introduction of suitable time delays.

Reference CM denotes a circuit designed to generate a signal for the control of writing and reading operations, obtained from the timing signal supplied by GT. This signal has a period equal to the bit time and comprises two parts, one at a logic level suited to the controlling of the reading operation and the other, which is much shorter, at a logic level suited to the controlling of the writing operation in the memory ME; in the circuit above said signal was directly supplied by GC. CM is connected via wire 23 to a comparison circuit CC, implemented e.g. with a bistable multivibrator, at whose output connected to wire 18 a signal appears at either logic level depending on whether. in the portion of the signal, devoted to control the writing operation in ME, a transition of the signal supplied by GC on wire 7 occurs or not. The signal on wire 18 controls both a multiplexer SC and a multiplexer SD.

The addresses supplied by LR arrive directly at the input of SC connected to the connection 8, while the same addresses stored in an auxiliary register RA arrive at the input connected to the connection 19. Transfer-to-the output commands arrive at RA on wire 24 through a delay element LS, timed by the signal supplied by GT on wire 22. Multiplexer SC sends to ME the addresses received from LR with or without delay in function of the result of the comparison effected by CC.

Analogously the multiplexer SD sends to ME via wire 16 the read/write signal supplied by CM via wire 23 or the same signal delayed by a second delay element LT and available on wire 17.

A typical example of the waveforms of the signals used in the just described circuit is shown in Fig. 3. Reference a) denotes the received signal, present on wire 3, reference b) the timing signal present on wire 5 (Fig. 1) or on wire 22 (Fig. 2) and reference c) the read write signal present on wire 6 (Fig. 1) or on wire 16 (Fig. 2).

Variations and modifications could be made while remaining within the scope of the invention.

More particularly, the described process can be implemented by effecting the sampling and correction operations both in analog way, as depicted in Figures 1 and 2, wherein a digital-to-analog converter DA exists downstream the memory ME, and at the logic level, by allocating an analog-to-digital converter at the input of the block SB and obviously by eliminating DA.

## 1 Patent Claims

1. System for the simultaneous bidirectional transmission via a two-wire line (2) for digital telephone, wherein the noise signal generated in the telephone receiver (RX) by the local transmitter (TX) is cancelled by means of a hybrid transformer (TI) as well as by a process <u>characterized in that</u> a suitable voltage level is subtracted from the signal present at the receiver output of the hybrid transformer and the resulting difference signal is used to determine according to its sign an increasing or decreasing operation in one of the binary digital values, wherefrom said suitable voltage levels are obtained by means of digital to analog conversion, which digital value is made available at the beginning of the transmission on the line of any symbol and is correlated to the logic level of said symbol or to those of a suitable number of symbols transmitted before, the simultaneous transmission on the line being effected in both directions by the use of a code allowing the sequences of the said symbols to present no dc component.

2. System according to claim 1, characterized in that said binary digital values are stored and identified by addresses consisting of a binary number corresponding to the transmitted symbol and to said convenient number of symbols transmitted before.

3. System according to claim 2, characterized in that from the received signal timing signals are extracted for the decoding operations, for the reading instant of the sign of said difference signal and for said increasing or decreasing operations.

4. System according to claim 2, characterized in that from the received signal timing signals are extracted for the storing and the reading of said binary digital values and for the transmission of said symbols.

5. System according to claim 2, characterized in that timing signals are generated for the storing and the reading of said binary digital values and for the transmission of said symbols.

6. System according to claim 2, characterized in that the operations of storing of the binary digital values are suitably delayed in comparison with said increasing or decreasing operation, when the storing operation coincides with the reading of the sign of said difference signal.

7. System according to any of claims 1 to 6, wherein the circuit implementing the method is characterized in that it comprises:

- a circuit (ES), capable of extracting a synchronism signal from the signal present at the receiver output (3) of said hybrid transformer (TI);

- a subtraction circuit (SB), capable of effecting the subtraction of said suitable voltage level from the signal present at the receiver output of the hybrid transformer and supplying at the output said difference signal;

- a decision circuit (DE), capable of recognizing the symbols received contained in the difference signal, and of driving the digital telephone receiver (RX), being timed by said timing signal for the decoding operations;

- a comparison circuit (CO), capable of recognizing the sign of the difference signal, supplying at the output a corresponding signal at high or low logic level;

- a memory element (EM), capable of storing the high or low logic level signal supplied by the comparison circuit and to supply it at its output, being enabled to the storing by the timing signal for the decoding operations;

- an algebraic adder (SA), capable of increasing or decreasing said binary digital value in function of the high or low level signal stored in the memory element (EM) and of supplying it at its output;

- a memory (ME), capable of storing the digital binary value present at the output of the algebraic adder and of supplying it at the output, in function of said timing signal for the decoding operations;

- a first delay line (LR), capable of supplying in parallel form and at a binary level the transmitted symbol and a number of symbols transmitted before to form the memory addresses, being timed together with the local transmitter (TX) by said timing signals for the symbol transmission.

8. System according to claim 7, characterized in that it comprises a timing circuit (GC), capable of generating said timing signal for the decoding operations, said timing signal for the storing and the reading and said timing signal for the transmission, on the basis of said synchronism signal.

9. System according to claim 7, characterized in that it comprises

- a timing circuit (GC), capable of generating said timing signal for the decoding operations;

- a circuit (CM), capable of generating said timing signal for the storing and the reading, by using the timing signal supplied by a centralized clock (GT);

- a comparison circuit (CC), capable of recognizing the occurrence of a level transition of the timing signal for the decoding operations during the permanence of the timing signal for the storing and the reading at a predetermined level, supplying at the output a suitable binary signal;

- a second delay line (LT), capable of delaying for a time shorter than the period of said symbols the timing signal for the storing and the reading;

- a first multiplexer (SD), capable of sending the timing signal for the storing and the reading or the same signal delayed by the second delay line to said memory (ME), in function of the binary signal supplied by the comparison circuit;

- an auxiliary register (RA), capable of storing the memory addresses supplied by said first delay line (LR) and of transferring them to the output at the arrival of a suitable signal;

- a third delay line (LS), capable of delaying the timing signal supplied by said centralized clock (GT) to enable the auxiliary register (RA) to effect the transfer to the output;

- a second multiplexer (SC), capable of sending said addresses or the same addresses present at the output of the auxiliary register to said memory (ME), in function of the binary signal supplied by the comparison circuit.

FIG.1

FIG. 3

FIG. 2

0059967

Application number

EP 82 10 1802

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,A | NATIONAL TELECOMMUNICATIONS CONFERENCE 1980, November 30, - December 4, 1980, Houston/Texas, Conference Record, vol.3/4, IEEE, New York (US), N. HOLTE et al.:"A new digital echo canceler for two-wire subscriber lines", pages 45.3.1 - 45.3.7 * page 45.3.2, left-hand column, lines 3-15; page 45.3.3, right-hand column, lines 5-40; page 45.3.4, left-hand column, lines 22-43; page 45.3.5, left-hand column, lines 1-44; figures 2b,3,4b,5 * | 1,2,7 | H 04 B 3/23 |
| | --- | | |
| A | GB-A-2 034 156 (SIEMENS SPA) * page 1, line 116 - page 2, line 67; figure 1 * | 3-6,8, 9 | |
| | ----- | | TECHNICAL FIELDS SEARCHED (Int. Cl. ³) |
| | | | H 04 B 3/23 H 04 L 5/14 H 04 B 1/58 H 04 M 1/58 |

The present search report has been drawn up for all claims

| Place of search THE HAGUE | Date of completion of the search 09-06-1982 | Examiner STRASSEN TH.W. |
|---|---|---|